Europäisches Patentamt

European Patent Office

Office européen des brevets

(11) Publication number: 0 385 128
A2

# EUROPEAN PATENT APPLICATION

(21) Application number: 90102135.2

(51) Int. Cl.⁵: H04N 7/14

(22) Date of filing: 03.02.90

(30) Priority: 02.03.89 NO 890904

(43) Date of publication of application:
05.09.90 Bulletin 90/36

(84) Designated Contracting States:
AT BE CH DE DK ES FR GB IT LI NL SE

(71) Applicant: ALCATEL N.V.
Strawinskylaan 341 (World Trade Center)
NL-1077 XX Amsterdam(NL)

(72) Inventor: Skow, Rune
Ulvenveien 123A
N-0665 Oslo 6(NO)

(74) Representative: Graf, Georg Hugo, Dipl.-Ing. et al
Standard Elektrik Lorenz AG Patent- und
Lizenzwesen Postfach 30 09 29
D-7000 Stuttgart 30(DE)

(54) Video terminal.

(57) This invention relates to a two way video terminal having video screen and a video camera. The parallax distortion experienced with such terminals is eliminated by using a flat video screen (2) of the transparent type and with individual pixel control, and a video camera (3) which is positioned directly behind the video screen to 'look through' the video screen. The video screen (2) is switched between two modes of operation, - one display mode and one 'look-through' mode, by control means (4).

Fig. 1

The present invention relates to a two way video terminal having a video screen and a video camera. Such terminals are used in video telephone networks including at least two subscriber stations each having a video screen for showing a picture or moving image of the other subscriber(s) and a video camera for recording the first subscriber. The terminal can also have other applications, such as entrance and security control.

One problem with such terminals is that the video camera usually has to be positioned above or below the video screen. When a subscriber looks at the image of the other subscriber on his video screen, there will be no eye contact, because the picture or moving image is taken at an angle.

The parallax problem has been solved in DE OS 3 431 902 by using a semi-transparent mirror through which the video camera takes pictures of the subscriber. His video screen is positioned above, below or at right angles to the video camera. The display on the video screen, i.e. the picture of the other subscriber, is deflected by the mirror so that its direction is aligned with the camera-subscriber direction.

The mentioned solution to the parallax problem has certain drawbacks. The mirror arrangement causes alignment and focusing problems and it requires more space than conventional terminals.

In DE OS 36 23 029 there is shown a video telephone subscriber unit in which there is provided a flat screen having two modes of operation. A video camera is arranged behind the screen to look through the screen which in its first mode of operation is transparent in the direction from the camera to a subscriber sitting in front of the screen. In the direction from the subscriber towards the screen, the screen is normally opaque. A picture projector which is arranged underneath the camera at a small distance from the camera lens, projects pictures onto the back side of the opaque screen, - pictures which can be observed by the subscriber sitting on the other side of the screen. Means are provided for switching the screen between its two modes, the transparent mode and the opaque mode. Whereas the described unit is relatively compact as compared to that described in DE OS 34 31 902, it has certain drawbacks, -firstly, that the projector requires a certain minimum distance from the projector to the screen, and - secondly, that there will still be a parallax distortion due to the distance between the projector lens and the camera lens.

The object of the invention is to obtain an even more compact video telephone subscriber unit and reduce the parallax distortion even more. The main features of the invention are defined in the accompanying claims.

A parallax free terminal made in accordance with the present invention is compact and requires few components, -only a video camera and a video screen which can be integrated in a small lightweight unit, with the camera directly behind the video screen.

Above mentioned and other features and objects of the present invention will clearly appear from the following detailed description of embodiments of the invention taken in conjunction with the drawings which schematically illustrate two video terminals according to the present invention.

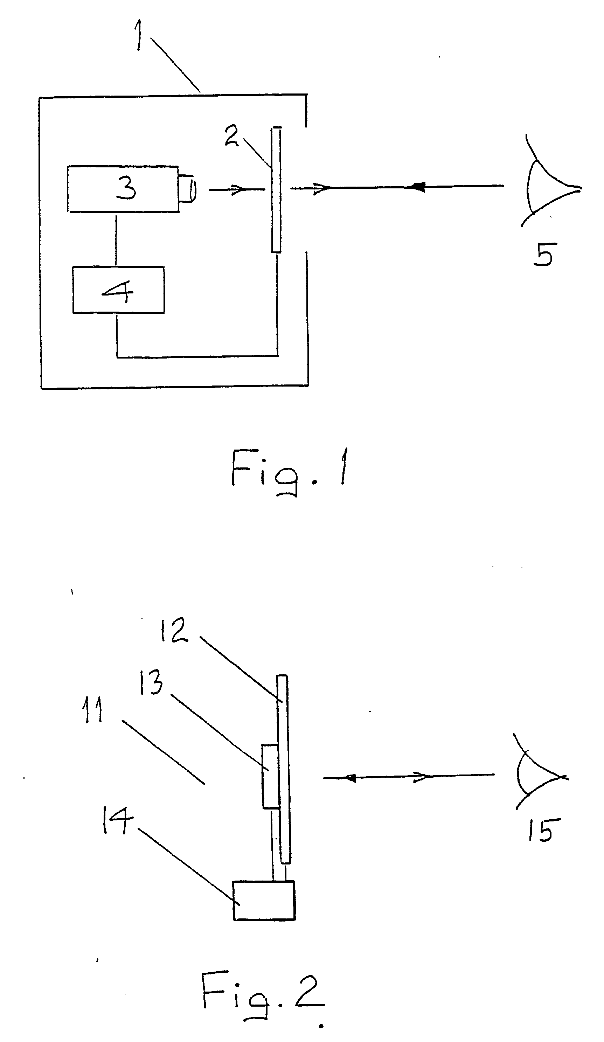

In Figure 1 a subscriber terminal 1 includes a video screen 2 and a video camera 3 as well as control means 4. Transmission and switching networks interconnecting two or more subscribers are not shown. The video screen 2 which has individual pixel control is of the flat screen type, such as an LCD screen, a plasma screen or similar screens which have transparent or 'look-through' capabilities. The video camera, which preferably is of the CCD type, is positioned directly behind the video screen 2. The video screen 2 has two modes of operation, - the ordinary picture display mode and a 'look-through' mode. In the 'look-through' mode the video camera will focus directly on the subscriber. Video screens or displays that can be used for this purpose are described e.g. in an article 'New Technologies Sharpen Laptop Displays', by Lisa Gunn in Electronic Design, Febr. 1989, pps 45-50.

A subscriber 5 looks at the screen 2 when talking with another subscriber and as the video camera 3 is positioned directly behind the video screen 2, there will be no or only negligible parallax distortion in the display viewed by the ether subscriber. By quickly toggling between the two modes of operation, both camera and image will appear in the same position, while the user only see the image on the screen. The subscribers will experience something close to a true eye contact.

In order to be able to look through the video screen it must be set to its transparent mode. In the case of an LCD screen this is obtained by orienting or aligning the crystals of the screen in specific positions.

The control means 4 is used to switch the video screen 2 between its two modes of operation, - the display mode and the 'look-through' mode, at a predetermined rate, and control the shutter of the video camera 3 in synchronism with that rate. This rate should preferably be such that the eye perceives a continuous picture or moving image. The terminal of the invention can also be used for computer graphic representations like instrument panels in combination with camera for recording of objects in front of the panel . Other application for this compact terminal would be security and entrance control and the like.

In Figure 2 is schematically illustrated a video terminal 11 in which a transparent and flat video screen 12 is integrated with a CCD camera 13 to provide a compact unit. This unit can also be integrated with a control box 14. Such a terminal can conveniently be placed on a table, hung on a wall or mounted on a stand.

The above detailed description of embodiments of this invention must be taken as examples only and should not be considered as limitations on the scope of protection.

## Claims

1. Two way video terminal having a video camera (3) positioned behind a flat screen, **characterized in this that** the flat screen is a video screen (2) having two modes of operation, one mode for picture generation by individual pixel control, and one 'look through' mode for recording an image in front of the video screen by the camera in rear.

2. Terminal according to claim 1, **characterized in this that** it includes control means (4) for switching the video screen (2) between its two modes of operation, - the display mode and the 'look-through' mode.

3. Terminal according to claim 2, **characterized in this that** the video camera (3) is synchronized with the video screen control means (4), so that the camera is operative only when the video screen is in its 'look-through' mode.

4. Terminal according to claim 1, **characterized in this that** the video camera is of the CCD type.

Fig. 1

Fig. 2